# EUROPEAN PATENT SPECIFICATION

(11) **EP 4 395 091 B1**
(45) Date of publication and mention of the grant of the patent: **06.05.2026**
(21) Application number: 23802498.8
(22) Date of filing: 21.03.2023
(51) Int. Cl.: H02G 9/02, H02G 11/02, H02G 3/04, F03B 13/20, H02G 1/10, H02G 9/12, H02G 15/007

(54) **DYNAMIC CABLE PROTECTION SYSTEM AND WIND POWER SYSTEM**
DYNAMISCHES KABELSCHUTZSYSTEM UND WINDKRAFTANLAGE
SYSTÈME DE PROTECTION DE CÂBLE DYNAMIQUE ET SYSTÈME D'ÉNERGIE ÉOLIENNE

(30) Priority: 10.05.2022 CN 202210503745
(43) Date of publication of application: 03.07.2024
(73) Proprietor: Zhongtian Technology Submarine Cable Co., Ltd., Nantong, Jiangsu 226000 (CN)
(72) Inventor: HU, Ming, Nantong, Jiangsu 226000 (CN); ZHANG, Hongliang, Nantong, Jiangsu 226000 (CN); WANG, Liyuan, Nantong, Jiangsu 226000 (CN); YE, Jinyu, Nantong, Jiangsu 226000 (CN); WANG, Wenchao, Nantong, Jiangsu 226000 (CN); ZHANG, Tianyi, Nantong, Jiangsu 226000 (CN); PAN, Pan, Nantong, Jiangsu 226000 (CN); ZHAO, Youlin, Nantong, Jiangsu 226000 (CN); ZHU, Jinghua, Nantong, Jiangsu 226000 (CN); CAO, Kai, Nantong, Jiangsu 226000 (CN); QIAO, Jing, Nantong, Jiangsu 226000 (CN)
(74) Representative: Bandpay & Greuter
(86) International application number: PCT/CN2023/082661
(87) International publication number: WO 2023/216722

(56) References cited:
- WO-A1-2013/126325
- WO-A1-2013/126325
- CN-A- 101 232 167
- CN-A- 113 217 295
- CN-A- 113 217 295
- CN-A- 113 629 649
- CN-A- 114 884 004
- CN-U- 210 555 470
- DE-A1- 102018 127 397
- JP-A- 2021 016 302
- TW-A- 201 838 278
- US-A1- 2011 155 383
- US-A1- 2022 060 009
- US-B1- 7 245 041
- US-B2- 10 988 211

## Description

### TECHNICAL FIELD

The present application relates to a technical field of offshore wind power generation, and in particular to a dynamic cable protection system and a wind power system.

### BACKGROUND

A dynamic cable, as a special medium for power and signal transmission, plays an indispensable role in the marine industry power transmission and the communication control signal transmission. For example, in floating wind power generation, the dynamic cable is needed to transmit the generated electric energy out of the wind field; in offshore oil and gas development, the dynamic cable is needed to supply power for platforms and devices; and in offshore new energy power generation, underwater observation, scientific expedition, etc., the dynamic cable is needed to transmit electric energy.

The dynamic cable is suspended in water, subjecting to combined effects of multiple factors such as marine hydrology, meteorology, etc., and thus it is inevitable that significant displacement, bending and twisting will occur, and in addition, a large number of marine organisms, such as shells and algae, in seawater accumulate on the dynamic cable, which will depress a linear shape of the dynamic cable, and if the dynamic cable is bent too much, it will cause the suspended portion of the dynamic cable in the water to move downwards and to be in contact with a seabed surface, and at this time, if the dynamic cable undergoes displacement and twisting motion, it will repeatedly rub against the seabed surface, seriously affecting use and lifespan of the dynamic cable.

Therefore, there is an urgent need for a dynamic cable protection system and a wind power system to avoid the linear shape of the dynamic cable to be depressed and come into contact with the seabed surface, which affects the use and lifespan of the dynamic cable.

US 2022/060009 A1 discloses an inter-array cable (IAC) assemblies, systems, and methods in which a conductive cable between two floating platforms, e.g., floating wind turbine platforms, is suspended below the sea surface and above the seabed. One or more buoyancy sections are included in the cable, which reduces the static tension on the connection at the floating platform by reducing the suspended cable weight, and which provides geometric flexibility, allowing the IAC to comply with platform motions.

US 10988211 B2 discloses a system that maintains the relative and/or absolute geographical positions of two or more buoyant devices floating in a body of water. A plurality of formation restoring tethers permit the unrestricted vertical movement of networked buoyant devices, while resisting increases in their lateral separations by providing restoring forces to oppose such separations. Tensioning mechanisms incorporated into the tethers generate the resistance to the lateral separations of two or more entities by transforming such separations into an increase in the potential energy stored within such tensioning mechanisms, the potential energy of which is released in the process of restoring the original separations and/or positions of the displaced buoyant devices.

US 2011/155383 A1 discloses a transfer system for transferring hydrocarbons, power or electrical/optical signals as the case may be from the seabed to the vessel or other buoyant structure in the shallow water when exposed to the environmental loadings from wind, wave and current. The conduit transfer system comprising a flexible pipe or umbilical extends from the buoyant unit at one end and to the seabed at the other end; and a riser support fixed to the seabed for supporting the flexible pipe characterized in that the flexible pipe a plurality of buoyancy beads for creating one or more inverse catenary curves of the flexible pipe to provide an excursion envelope.

CN 113217295 A discloses a shallow water floating wind power system and its dynamic cable component. The dynamic cable component for shallow water floating wind power system provided by the present invention includes a dynamic cable, multiple buoyancy units, and multiple connection units. The connection unit includes a mooring chain and an elastic cable, and the dynamic cable is connected to the seabed through the mooring chain and the elastic cable. The connection unit and the buoyancy unit jointly define the line shape of the dynamic cable. The line shape of the dynamic cable includes a first trough segment, multiple peak segments, and a second trough segment between adjacent two peak segments. The buoyancy unit is set at the top of the peak segment, and the connection unit is set on the side of the peak segment away from the floating wind turbine.

WO 2013/126325 A1 discloses an apparatus for transmitting oceanographic data includes a mooring cable having a data transmission cable configured to transmit the oceanographic data. A reinforcement layer surrounds the data transmission cable, and a protective outer jacket surrounds the reinforcement layer. The mooring cable has sections of different densities to provide the mooring cable with an inverse catenary shape. These sections include a first section defined by the data transmission cable, the reinforcement layer, and the protective outer jacket. A second section configured to sink in sea water transitions to the first section and is defined by the reinforcement layer and the protective outer jacket. A third section transitions to the second section and is defined by the reinforcement layer. A fourth section configured to float in sea water transitions to the third section and is defined by the reinforcement layer.

JP 2021 016302 A discloses a dynamic cable 10 connected to a floating type floating facility 1 underwater so as to be bendable includes: a cable wire core including a conductor and an insulation layer provided so as to surround an outer periphery of the conductor; and a protection layer provided so as to surround an outer periphery of the cable wire core and inhibiting aquatic organisms from adhering thereto.

### SUMMARY

The present application provides a dynamic cable protection system and a wind power system for at least solving the technical problem that the linear shape of the dynamic cable is easily depressed to come into contact with the seabed surface, which affects the use and lifespan of the dynamic cable. The present application is set out in the appended set of claims.

In order to achieve the above object, the present application provides a dynamic cable protection system, including:
a dynamic cable that is located in a water environment and configured to transmit a signal or electrical energy between a water-surface device and an underwater device;
a plurality of first buoyancy devices that are spaced apart on the dynamic cable along a length direction of the dynamic cable;
a plurality of second buoyancy devices that are configured to float on a water surface;
a plurality of first connecting devices, where the second buoyancy devices are connected to the dynamic cable through the first connecting devices, and positions where the first connecting devices are connected to the dynamic cable are located between two adjacent first buoyancy devices;
where the dynamic cable is configured to present a plurality of crest segments with the first buoyancy devices being crest positions and a plurality of trough segments with connection positions between the first connecting devices and the dynamic cable being trough positions, under drive of the first buoyancy devices and the second buoyancy devices, and the second buoyancy devices are configured to define lowest positions of the trough segments, and the trough segments are connected between two adjacent crest segments.

In a dynamic cable protection system provided by the present application, a plurality of first buoyancy devices are spaced apart on the dynamic cable, the second buoyancy devices float on a water surface, and the second buoyancy devices are connected to the dynamic cable through the first connecting devices, and under the buoyancy action of the first buoyancy devices and the second buoyancy devices themselves, the dynamic cable presents a certain linear shape underwater, and through the pulling action of the second buoyancy devices and the first connecting devices on the dynamic cable, it can be avoided that the dynamic cable bends downward too much to come into contact with the seabed surface due to attachment of marine organisms, which results in repeated friction of the dynamic cable with the seabed surface when the dynamic cable moves and twists and thus affects the use and lifespan of the dynamic cable; and the dynamic cable has increased reliability for long term use, especially in shallow waters.

In a possible implementation, the second buoyancy devices include an upper buoyancy part and a lower buoyancy part, the upper buoyancy part and the lower buoyancy part are hermetically connected to each other through a fixing part, and an average density of the upper buoyancy part is less than or equal to an average density of the lower buoyancy part.

In a possible implementation, the dynamic cable protection system further includes a counterweight device, where the counterweight device is connected to the dynamic cable, and the counterweight device is located at an end of the dynamic cable close to a water-surface device.

In a possible implementation, the dynamic cable protection system further includes a limiting device, where the limiting device is connected to the dynamic cable through a mooring device, a position where the mooring device is connected to the dynamic cable is located at an end of the dynamic cable close to an underwater device, and the position where the mooring device is connected to the dynamic cable is further connected to the second buoyancy device through the first connecting device.

In a possible implementation, the limiting device is fixed to a water bottom or suspended in water, and the limiting device pulls the dynamic cable in a direction close to the water bottom.

In a possible implementation, the dynamic cable is provided with a protective device, the protective device is located at least on a portion of an area between a connection position of the dynamic cable to the underwater device and a connection position of the mooring device to the dynamic cable.

In a possible implementation, the dynamic cable protection system further includes a second connecting device, and two adjacent second buoyancy devices are connected through the second connecting device.

In a possible implementation, a surface of the dynamic cable is covered with a biological inhibitor; or the surface of the dynamic cable is covered with a sheath including a biological inhibitor.

According to the invention, the first connecting device is a rope or an elastic cord; and in a possible implementation, the second connecting device is a rope or an elastic cord.

The present application further provides a wind power system, including a water-surface device, an underwater device, a static cable and the above dynamic cable protection system, where the water-surface device is a buoyancy power generation device, the underwater device is a fixing device, one end of the dynamic cable of the dynamic cable protection system is electrically connected to the buoyancy power generation device, and another end of the dynamic cable is connected to the static cable through the fixing device.

In a possible implementation, a position where the dynamic cable is electrically connected to the buoyancy power generation device is provided with a first bending limiting device; and a position where the dynamic cable is connected to the fixing device is provided with a second bending limiting device.

In a possible implementation, the buoyancy power generation device and an adjacent second buoyancy device are connected through the second connecting device.

In the dynamic cable protection system and the wind power system provided by the present application, by making the dynamic cable exhibit a shape in which a plurality of crest segments and a plurality of trough segments are alternately connected with each other underwater, for example, a bimodal shape, a multi-humped shape, etc., the dynamic cable has an ability to moderate impacts due to occurrence of moving, bending and twisting motions, which is conducive to increasing the service life of the dynamic cable.

In the wind power system provided in the present application, the dynamic cable is designed with a multi-humped in-water linear shape, which ensures that both the crest segments and the trough segments in the linear shape of the dynamic cable are away from the seabed, avoiding coming into contact with the bottom thereof and having the ability to resist drastic horizontal swaying of a floating device.

In the dynamic cable protection system and the wind power system provided by the present application, the second connecting device is configured to connect two adjacent second buoyancy devices, so that the plurality of second buoyancy devices are connected as a whole, which helps to constrain a floating range of the second buoyancy devices on a water surface, and is favorable to constrain the linear shape of the dynamic cable.

In the dynamic cable protection system and the wind power system provided by the present application, a surface of the dynamic cable is covered with a biological inhibitor or the surface of the dynamic cable is covered with a sheath including a biological inhibitor, which is favorable to avoid sea organisms attaching to the dynamic cable and thus causing the dynamic cable to be depressed, and furthermore a combination of setting the second buoyancy device as physical means and the biological inhibitor as chemical means has a good effect of preventing the dynamic cable from being depressed to come into contact with the bottom, improving the service life of the dynamic cable.

In addition to the technical problems solved by the embodiments of the present application, the technical features constituting the technical solutions, and the beneficial effects brought about by these technical features of the technical solutions described above, other technical problems that can be solved by the dynamic cable protection system and the wind power system provided by the embodiments of the present application, other technical features contained in the technical solutions, and the beneficial effects brought about by these technical features will be described in further detail in DESCRIPTION OF EMBODIMENTS.

### BRIEF DESCRIPTION OF DRAWINGS

In order to more clearly illustrate the technical solutions in the embodiments of the present application or in prior art, the following will briefly introduce the accompanying drawings that need to be used in the description of the embodiments or the prior art, and it will be obvious that the accompanying drawings in the following description are some of the embodiments of the present application, and for an ordinary person skilled in the art, other accompanying drawings can be obtained based on these accompanying drawings without creative labor.
FIG. 1 is a schematic structural diagram of a wind power system provided by an embodiment of the present application.
FIG. 2 is a schematic structural diagram of a second buoyancy device of a dynamic cable protection system provided by an embodiment of the present application.
FIG. 3 is another schematic structural diagram of a second buoyancy device of a dynamic cable protection system provided by an embodiment of the present application.
FIG. 4 is a schematic three-dimensional structural diagram of a first buoyancy device of a dynamic cable protection system provided by an embodiment of the present application.
FIG. 5 is another schematic three-dimensional structural diagram of a first buoyancy device of a dynamic cable protection system provided by an embodiment of the present application.
FIG. 6 is a front view of a first buoyancy device of a dynamic cable protection system provided in an embodiment of the present application.
FIG. 7 is a sectional view taken along A-A of FIG. 6.
FIG. 8 is a right view of a first buoyancy device of a dynamic cable protection system provided in an embodiment of the present application.
FIG. 9 is a schematic three-dimensional structural diagram of a counterweight device of a dynamic cable protection system provided by an embodiment of the present application.
FIG. 10 is a schematic three-dimensional structural diagram of a first bending limiting device of a dynamic cable protection system provided by an embodiment of the present application.
FIG. 11 is a schematic structural diagram of an anchoring device of a dynamic cable protection system provided by an embodiment of the present application.

### Description of reference numbers:

10- dynamic cable;
11- first bending limiting device;
12- second bending limiting device;
13- protective device;
15- anchoring device;
20- first buoyancy device;
21- through cavity;
22- annular groove;
23- cable tie;
24- clamping part;
25- filling part;
30- second buoyancy device;
31- upper buoyancy part;
311- valve;
32- lower buoyancy part;
33- fixing part;
40- first connecting device;
41- first intermediate device;
50- second connecting device;
60- counterweight device;
61- hoop;
62- fastening part;
63- inner cavity;
70- limiting device;
71- mooring device;
72- second intermediate device;
81- buoyancy power generation device;
82- fixing device;
90- seabed surface.

### DESCRIPTION OF EMBODIMENTS

In order to make purposes, technical solutions and advantages of the present application clearer, the technical solutions in the present application will be described clearly and completely in the following in conjunction with the accompanying drawings in the present application, and it is obvious that the described embodiments are some of the embodiments of the present application and not all of the embodiments. Based on the embodiments in the present application, all other embodiments obtained by an ordinary person skilled in the art without creative labor are within the protection scope of the present application.

A dynamic cable, especially in shallow water environments, is susceptible to violent swaying during use due to multiple factors such as waves, ocean currents and platforms, etc., and additionally if the dynamic cable excessively bends downwards and comes into contact with the seabed surface, it will easily lead to structural damage to the dynamic cable, affecting the use and lifespan of the dynamic cable. Through research, it has been found that maintaining a certain in-water linear shape of the dynamic cable is beneficial to avoid the risk of the dynamic cable going out of control in extreme situations and causing failure. However, since the dynamic cable is buried in water, there will be a large number of marine organisms accumulating on its surface, causing an increase in outer diameter and weight of the dynamic cable, which is likely to cause local corrosion of the dynamic cable and change of the linear shape in water, and cause the dynamic cable to come into contact with the bottom and be damaged.

In view of the above, in the present application, a plurality of first buoyancy devices and a plurality of second buoyancy devices are included, where the second buoyancy devices float on a water surface. Through a buoyancy action of the first buoyancy devices and the second buoyancy devices themselves, the dynamic cable presents a certain linear shape underwater, and through a pulling action of the second buoyancy devices and first connecting devices on the dynamic cable, it can be avoided that the dynamic cable bends downward too much to come into contact with the seabed surface due to attachment of the marine organisms.

A dynamic cable protection system and a wind power system provided by embodiments of the present application will be described below with reference to the accompanying drawings.

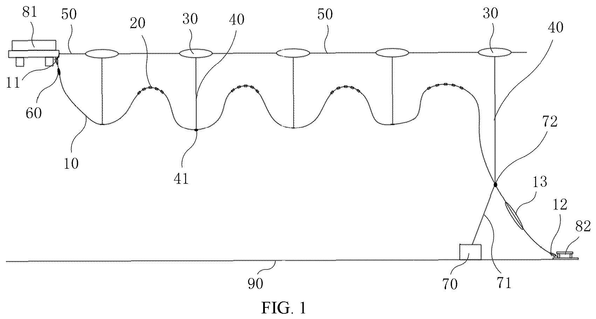

As shown in FIG. 1, the present application provides a dynamic cable protection system, including: a dynamic cable 10, a plurality of first buoyancy devices 20, a plurality of second buoyancy devices 30, and a plurality of first connecting devices 40, where the dynamic cable 10 is located in a water environment and configured to transmit a signal or electrical energy between a water-surface device and an underwater device; the plurality of first buoyancy devices 20 are spaced apart on the dynamic cable 10 along a length direction of the dynamic cable 10; the second buoyancy devices 30 are configured to float on a water surface, and the second buoyancy devices 30 are connected to the dynamic cable 10 through the first connecting devices 40, and positions where the first connecting devices 40 are connected to the dynamic cable 10 are located between two adjacent first buoyancy devices 20; the dynamic cable 10 is configured to have, under drive of the first buoyancy devices 20 and the second buoyancy devices 30, a plurality of crest segments with the first buoyancy devices 20 being crest positions and a plurality of trough segments with connection positions between the first connecting devices 40 and the dynamic cable 10 being trough positions, and the second buoyancy devices 30 are configured to define lowest positions of the trough segments, and the trough segments are connected between two adjacent crest segments.

In the dynamic cable protection system provided by the present application, the plurality of first buoyancy devices 20 are set on the dynamic cable 10 at intervals, the second buoyancy devices 30 float on a water surface, and the second buoyancy devices 30 are connected to the dynamic cable 10 through the first connecting devices 40, and under the buoyancy action of the first buoyancy devices 20 and the second buoyancy devices 30 themselves, the dynamic cable 10 exhibits a certain linear shape underwater, and through the pulling action of the second buoyancy devices 30 and the first connecting devices 40 on the dynamic cable 10, it can be avoided that the dynamic cable 10 bends downward too much to come into contact with a seabed surface 90 due to attachment of the marine organisms, which results in repeated friction of the dynamic cable 10 with the seabed surface 90 when the dynamic cable 10 moves and twists and thus affects the use and lifespan of the dynamic cable 10; and the dynamic cable 10 has increased reliability for long term use, especially in shallow waters.

In the dynamic cable protection system provided by the present application, by making the dynamic cable 10 to present a shape in which the plurality of crest segments and the plurality of trough segments are alternately connected with each other underwater, for example, a bimodal shape, a multi-humped shape, etc., the dynamic cable 10 has an ability to moderate impacts due to occurrence of moving, bending, and twisting motions in the dynamic cable 10, which is conducive to increasing the service life of the dynamic cable 10.

The second buoyancy devices 30 are connected to the dynamic cable 10 through the first connecting devices 40, and the positions where the first connecting devices 40 are connected to the dynamic cable 10 are located between two adjacent first buoyancy devices 20, the connection positions between the first connecting devices 40 and the dynamic cable 10 are the trough positions. In this way, the lowest positions of the trough segments are limited under an upward pulling action of the second buoyancy devices 30 and the first connecting devices 40, avoiding excessive bending of the dynamic cable 10, and also avoiding upward floating of the dynamic cable 10 as a whole, and then improving the service life of the dynamic cable 10.

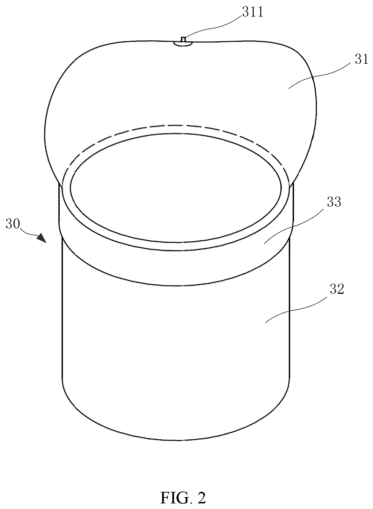

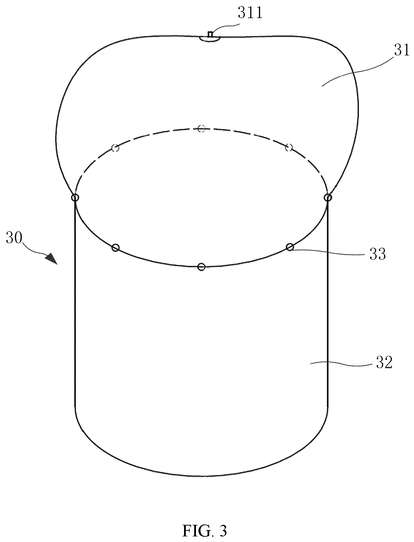

In a possible implementation, as shown in FIG. 2 and FIG. 3, the second buoyancy devices 30 include an upper buoyancy part 31 and a lower buoyancy part 32, where the upper buoyancy part 31 and the lower buoyancy part 32 are hermetically connected to each other through a fixing part 33, and an average density of the upper buoyancy part 31 is less than or equal to an average density of the lower buoyancy part 32. The fixing part 33 enables a good airtightness to be maintained at a connection position between the upper buoyancy part 31 and the lower buoyancy part 32. Such a structure ensures that the buoyancy of the second buoyancy devices 30 is always greater than a preset load weight and the upper buoyancy part 31 is able to provide sufficient buoyancy, greatly improving the safety of the entire dynamic cable protection system in use.

In a possible implementation, the upper buoyancy part 31 may be an airbag, for example, in spherical or ellipsoidal shape and the like, and the upper buoyancy part 31 may be a single-layer structure, and its interior is not limited to being filled with air or helium, but may also be filled with other gas, and when the upper buoyancy part 31 is filled with a certain pressure of gas, the upper buoyancy part 31 has a certain rigidity and is resistant to impacts from waves, ensuring a long service life.

In a possible implementation, the upper buoyancy part 31 may also be a two-layer structure, with a gas-filled inner layer and a water-filled outer layer, so that the upper buoyancy part 31 maintains a good airtightness and maintains a pressure, avoiding the second buoyant devices 30 from floating up into the air and affecting the use.

The upper buoyancy part 31 is not limited to using a soft silica gel material or a rubber material, but can also be other flexible materials. The lower buoyancy part 32 may be a buoyancy block machined from a commonly used buoyancy material, and the lower buoyancy part 32 is not limited to using one or more of polyurethane, polyethylene, glass beads and other materials.

It is easy to be understood that the average density of the upper buoyancy part 31 refers to an average value obtained from both a density of a material of the upper buoyancy part 31 itself and a density of a medium filled inside the upper buoyancy part 31. The lower buoyancy part 32 also has an uneven density due to uneven material and other reasons, and the average density of the lower buoyancy part 32 refers to an average value of a density of the material used in the lower buoyancy part 32.

In a possible implementation, the upper buoyancy part 31 is sleeved over an upper end of the lower buoyancy part 32, the fixing part 33 may be a collar, the upper buoyancy part 31 passes through the collar, and the collar is sleeved over the upper end of the lower buoyancy part 32 and is fixedly connected to the lower buoyancy part 32, the upper buoyancy part 31 and the lower buoyancy part 32 are compressed through the fixing part 33, which may ensure that the upper buoyancy part 31 maintains a good airtightness. It is easy to be understood that it is possible to provide a sealing part at the connection position between the upper buoyancy part 31 and the lower buoyancy part 32, or coat a bonding agent, such as glue or the like, at the connection position between the upper buoyant part 31 and the lower buoyant part 32, so that connection between the upper buoyancy part 31 and the lower buoyancy part 32 is stable and maintains a good airtightness.

In another possible implementation, the fixing part 33 can be a screw, and an edge of the upper buoyancy part 31 is tightly connected to the lower buoyancy part 32 by the screw. And a bonding agent, such as glue, is coated at a connection position of the fixing part 33 or a sealing part is provided at the connection position of the fixing part 33, to ensure that the connection between the upper buoyancy part 31 and the lower buoyancy part 32 does not affect the airtightness of the upper buoyancy part 31.

In another possible implementation, the upper buoyancy part 31 may be circular and internally filled with a gas, the upper buoyancy part 31 along its inner diameter is integrally sleeved over an outer periphery of the lower buoyancy part 32, and a baffle plate is connected at top of the lower buoyancy part 32, the baffle plate is used to prevent the upper buoyancy part 31 from detaching. In addition, it is also possible to use a fixing part 33 to tightly connect the upper buoyancy part 31 with the lower buoyancy part 32, and the fixing part 33 is a screw.

It is easy to be understood that the upper buoyancy part 31 has a valve 311, and the upper buoyancy part 31 is filled with a gas through the valve 311, the valve 311 maintains a sealing effect to prevent gas leakage from the valve 311.

A connection lug may be provided at a bottom and on both sides of the lower buoyancy part 32, the connection lug may be integrally formed with the lower buoyancy part 32, and the connection lug is provided with a through hole, which is convenient to fixedly connect the lower buoyancy part 32 to the first connecting device 40, and is also convenient to fixedly connect the lower buoyancy part 32 to the second connecting device 50.

As shown in FIG. 1 and FIG. 3, when working normally, the lower buoyancy part 32 of the second buoyancy device 30 is immersed in water while the upper buoyancy part 31 remains above the water surface, and since the average density of the buoyant material itself of the lower buoyancy part 32 is lower than the density of seawater, a suitable net buoyancy can be provided through the lower buoyancy part 32 for the entire dynamic cable protection system so as to meet a requirement of use.

The average density of the upper buoyancy part 31 is less than or equal to the average density of the lower buoyancy part 32, and thus after a tensile force transmitted by the dynamic cable 10 to the second buoyancy device 30 exceeds a preset value that the second buoyancy device 30 may withstand, a section of the dynamic cable 10 mounted with the second buoyancy device 30 has a tendency to be dragged downwards below the water surface, and at this time, the lower buoyancy part 32 continues downward until it is completely submerged in water. If sufficient net buoyancy is still not provided at this time, the upper buoyancy part 31 is also dragged towards underwater along with the lower buoyancy part 32, thereby part of the volume of the upper buoyancy part 31 is submerged in water. Since the upper buoyancy part 31 is filled with gas, and the average density of the upper buoyancy part 31 is much lower than the average density of seawater, the upper buoyancy part 31 can provide sufficient net buoyancy, ensuring that a section of the dynamic cable 10 mounted with the second buoyancy device 30 will not be dragged to a deeper depth, and ensuring the stability of the entire dynamic cable protection system in use.

When the tensile force transmitted by the dynamic cable 10 to the second buoyancy device 30 is decreased, the upper buoyancy part 31 will float upwards and gradually emerges out of the water surface, the net buoyancy provided by the second buoyancy device 30 will be reduced until the overall load is balanced, ensuring the stability and balance of the entire dynamic cable protection system in use and an effective response to harsh natural environments.

In a possible implementation, the second buoyancy devices 30 are in one-to-one connection with the first connecting devices 40.

In a possible implementation, as shown in FIG. 1, in order to ensure a stable connection between the first buoyancy devices 20 and the dynamic cable 10, the first buoyancy devices 20 may be tightly connected to the outer periphery of the dynamic cable 10, so that positions of the dynamic cable 10 sheathed with the first buoyancy devices 20 are suspended in water and presents a plurality of crest segments with the first buoyancy devices 20 being the crest positions.

In a possible implementation, the first buoyancy device 20 may be a buoyancy block, which are connected to the outer periphery of the dynamic cable 10.

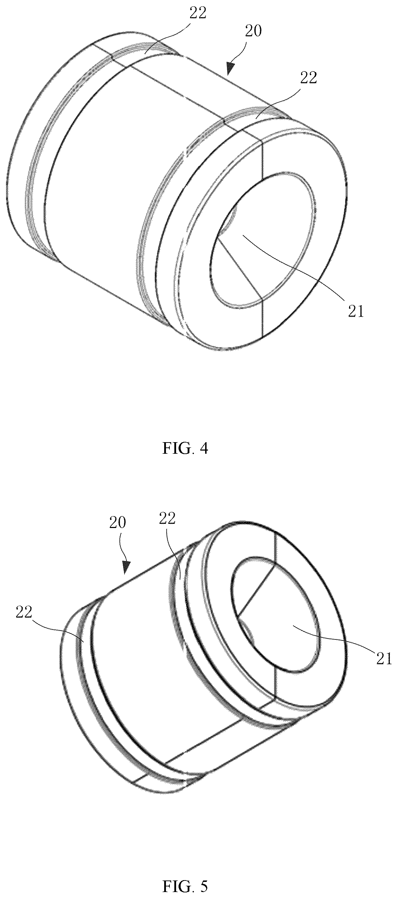

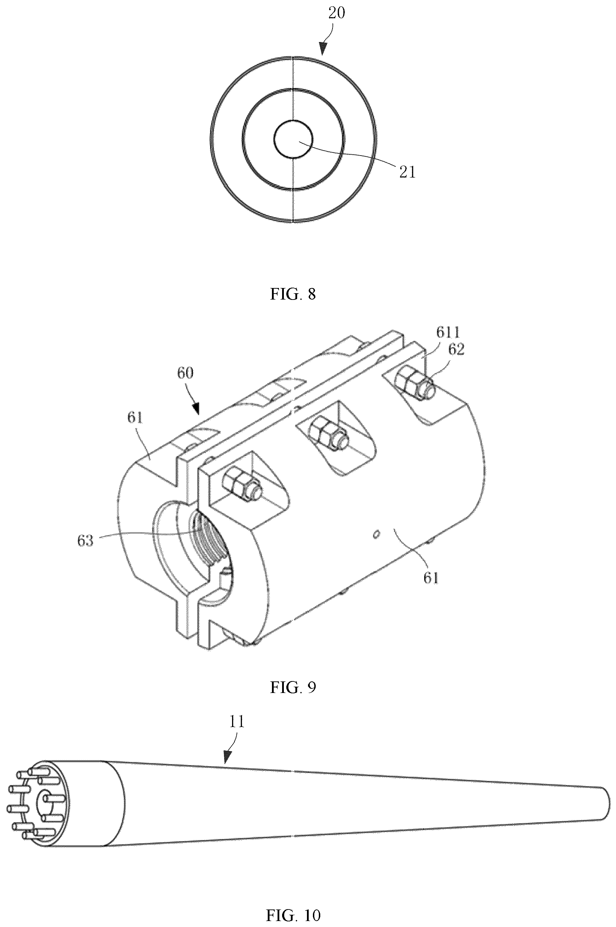

In a possible implementation, as shown in FIG. 4 and FIG. 5, the first buoyancy device 20 may be a buoyancy cylinder, and as shown in FIG. 1 and FIG. 8, a through cavity 21 is provided within the first buoyancy device 20, the first buoyancy device 20 is sleeved over the outer periphery of the dynamic cable 10, and the dynamic cable 10 passes through the through cavity 21.

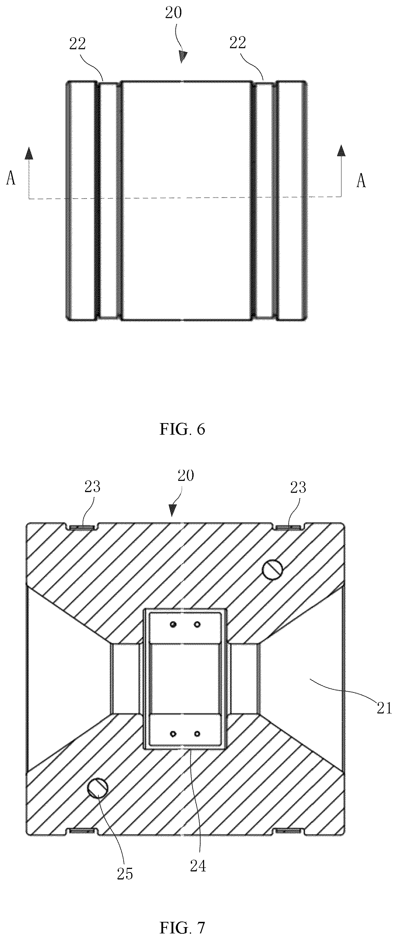

In a possible implementation, as shown in FIG. 6 and FIG. 7, a through cavity 21 is provided within the first buoyancy device 20, a clamping part 24 is provided within the through cavity 21, the clamping part 24 may be fixed within the through cavity 21 through a screw, a filling part 25 is provided within an inner wall of the first buoyancy device 20, an annular groove 22 is provided on the outer periphery of the first buoyancy device 20, a cable tie 23 is provided within the annular groove 22, and the first buoyancy device 20 is stably fixed on the outer periphery of the dynamic cable 10 through the cable tie 23 and the clamping part 24. The clamping part 24 can be a clamp and the filling part 25 can be a buoyancy block.

In a possible implementation, the first buoyancy device 20 can also be a block structure integrally formed with the outer periphery of the dynamic cable 10; for example, it can be formed by pouring hollow carbon fiber balls or hollow glass balls together with a bonding material into a mold, and naturally cooling them.

In a possible implementation, a plurality of first buoyancy devices 20 may be set on the dynamic cable 10 at intervals along a length direction of the dynamic cable 10. For example, it may be that the plurality of first buoyancy devices 20 are uniformly distributed along the length direction of the dynamic cable 10; or it may be that the plurality of first buoyancy devices 20 are divided into groups, the first buoyancy devices 20 in the groups are uniformly distributed along the length direction of the dynamic cable 10, and the first buoyancy devices 20 in each group are arranged in sequence, and the number of the first buoyancy devices 20 may be set flexibly according to a use demand, having no specific restriction herein.

In a possible implementation, the second buoyancy device 30 floats on the water surface, the second buoyancy device 30 can be a buoyancy ball, for example a buoyancy ball made of a foamed polyethylene, foamed polypropylene or foamed polyurethane material, an interior of the second buoyancy device 30 may also be hollow and filled with a gas.

In a possible implementation, the first connecting device 40 may be connected with the dynamic cable 10 through a first intermediate device 41. The first intermediate device 41 is fixedly connected to one end of the first connecting device 40, and the first intermediate device 41 may be a connecting sleeve for sleeving over the dynamic cable 10 in a circumferential direction of the dynamic cable 10; or the first intermediate device 41 may be a clamping part clamped onto the dynamic cable 10 in a circumferential direction of the dynamic cable 10. In this way, the first connecting device 40 is stably connected to the dynamic cable 10 through the first intermediate device 41, avoiding the destruction between the dynamic cable 10 and the first connecting device 40 due to excessive impact.

In a possible implementation, the first intermediate device 41 may be formed of a wear-resistant non-metallic material for protecting the dynamic cable 10 from being damaged due to wear when the dynamic cable 10 comes into contact with the seabed surface 90.

In a possible implementation, the dynamic cable protection system further includes a counterweight device 60, where the counterweight device 60 is connected to the dynamic cable 10, and the counterweight device 60 is located at an end of the dynamic cable 10 close to a water-surface device.

It is easy to be understood that the counterweight device 60 has a certain weight to apply a downward gravity to the dynamic cable 10, and by virtue of the weight of the counterweight device 60, an end of the dynamic cable 10 near the water-surface device is pressed downwards into the water, preventing the dynamic cable from floating above the water surface.

In a possible implementation, as shown in FIG. 1 and FIG. 9, the counterweight device 60 includes at least two hoops 61 interlocked with each other, an inner cavity 63 is formed inside the counterweight device 60, the hoops 61 tightly hold the outer periphery of the dynamic cable 10, and two adjacent hoops 61 are connected by a fastening part 62, so that the hoops 61 are stably fixed on the dynamic cable 10, adding a counterweight to the dynamic cable 10. The hoop 61 has a certain wall thickness, which has an effect of increasing the counterweight.

In a possible implementation, the hoop 61 has a connecting part 611, a connecting hole is provided within the connecting part 611, and when two hoops 61 are interlocked with each other, the connecting parts 611 of the two hoops 61 are abutted against each other, so that the fastening part 62 is inserted into the connecting hole to stably connect the two hoops 61.

In a possible implementation, the fastening part 62 may be a bolt, a stud, a screw and the like, facilitating the installation and removal of the counterweight device 60.

In a possible implementation, as shown in FIG. 1, the dynamic cable protection system further includes a limiting device 70, the limiting device 70 is fixed to a water bottom or suspended in the water, the limiting device 70 is connected to the dynamic cable 10 through a mooring device 71, a position where the mooring device 71 is connected to the dynamic cable 10 is located at an end of the dynamic cable 10 close to a underwater device, and the position where the mooring device 71 is connected to the dynamic cable 10 is further connected to the second buoyancy device 30 through the first connecting device 40. Such a structure allows the mooring device 71 to be connected to the dynamic cable 10 at a position that not only restricts the dynamic cable 10 from overbending downwards to come into contact with the bottom, but also prevents the dynamic cable 10 from being excessively lifted upwards to cause excessive bending of an end of the dynamic cable 10 connected to the underwater device.

In a possible implementation, the limiting device 70 is fixed to a water bottom or suspended in water, the limiting device 70 pulls the dynamic cable 10 in a direction close to the water bottom, the limiting device 70 enables a stable connection between the dynamic cable 10 and the underwater device through the mooring device 71.

In a possible implementation, the mooring device 71 may be connected to the dynamic cable 10 through a second intermediate device 72; or, of course, both the mooring device 71 and the first connecting device 40 may be connected to the dynamic cable 10 through the second intermediate device 72. The second intermediate device 72 may be sleeved over the outer periphery of the dynamic cable 10 or clamped to the outer periphery of the dynamic cable 10, avoiding damage between the dynamic cable 10 and the mooring device 71 due to excessive impact.

In a possible implementation, the dynamic cable 10 is provided with a protective device 13, the protective device 13 is located at least on a portion of an area between a connection position of the dynamic cable 10 to the underwater device and a connection position of the mooring device 71 to the dynamic cable 10. Considering that there is a possibility that the portion of the area between the connection position of the dynamic cable 10 to the underwater device and the connection position of the mooring device 71 to the dynamic cable 10 may come into contact with the seabed surface 90 during the movement of the dynamic cable 10, the protective device 13 is thus provided in this portion of the area so as to protect the dynamic cable 10.

In a possible implementation, the protective device 13 may be a wear-resistant protective sleeve for increasing the wear resistance of the portion of the area of the dynamic cable 10.

In a possible implementation, the mooring device 71 may be an elastic cord, spring, non-elastic rope, etc.

In a possible implementation, two adjacent second buoyancy devices 30 are both in a free-floating state, and the two adjacent second buoyancy devices 30 are not connected to each other.

In a possible implementation, the dynamic cable protection system further includes a second connecting device 50, the second connecting device 50 is connected between a number of adjacent second buoyancy devices 30. The second connecting device 50 is configured to connect two adjacent second buoyancy devices 30, so that a plurality of second buoyancy devices 30 are connected as a whole, which helps to constrain a floating range of the second buoyancy devices 30 on the water surface.

It is easy to be understood that it may be that the second connecting device 50 connects two or more adjacent second buoyancy devices 30 in series as a group, or it may also be that the second connecting device 50 connects all of the second buoyancy devices 30 in series, thereby serving to constrain the floating range of the second buoyancy devices 30, which is favorable to constrain the linear shape of the dynamic cable 10.

In a possible implementation, a surface of the dynamic cable 10 is covered with a biological inhibitor; or the surface of the dynamic cable 10 is covered with a sheath including a biological inhibitor. The sheath encases the dynamic cable 10 therein, which may prevent marine organisms from attaching to the dynamic cable 10 and thus causing the dynamic cable to be depressed.

In a possible implementation, the surface of the dynamic cable 10 may be covered with the biological inhibitor by means of spraying.

In a possible implementation, the first connecting device 40 is a rope or an elastic cord; when changes in the water environment in which the dynamic cable protection system provided by the present application is located cause a wide-ranging drift or violent swaying of the dynamic cable 10, the first connecting device 40 may ensure a stable holding of the dynamic cable 10, restrict a distance between the trough segment of the dynamic cable 10 and the water surface from being too large, thereby avoiding the dynamic cable 10 from coming into contact with the bottom in an operating state due to the action of waves, ocean currents or other factors to cause damage, ensuring a service life of the dynamic cable 10.

In a possible implementation, the second connecting device 50 is a rope or an elastic cord.

The dynamic cable protection system provided by this embodiment combines a physical means for setting the second buoyancy device 30 to tow the dynamic cable 10 and a chemical means for covering the surface of the dynamic cable 10 with the biological inhibitor, thereby having a good effect of preventing the dynamic cable 10 from bending downwards to come into contact with the bottom, improving the service life of the dynamic cable 10.

The present application further provides a wind power system, including a water-surface device, an underwater device, a static cable and the above dynamic cable protection system, where the water-surface device is a buoyancy power generation device 81, the underwater device is a fixing device 82, one end of the dynamic cable 10 of the dynamic cable protection system is electrically connected to the buoyancy power generation device 81, and the other end of the dynamic cable 10 is connected to the static cable through the fixing device 82.

In a possible implementation, the buoyancy power generation device 81 may be a floating wind turbine generator.

In a possible implementation, the fixing device 82 may be a connector for connecting the dynamic cable 10 to the static cable.

In a possible implementation, as shown in FIG. 1 and 10, a first bending limiting device 11 is provided at a position where the dynamic cable 10 is electrically connected to the buoyancy power generation device 81, and a second bending limiting device 12 is provided at a position where the dynamic cable 10 is connected to the fixing device 82.

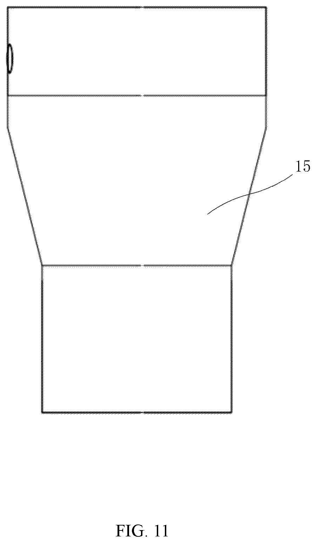

As shown in FIG. 1 and 11, the first bending limiting device 11 may be a rigid tube sleeve, the second bending limiting device 12 may have the same structure as the first bending limiting device 11, and the outer periphery of the dynamic cable 10 is also connected to an anchoring device 15 for fixing the first bending limiting device 11 and the second bending limiting device 12, the first bending limiting device 11 is correspondingly connected to the anchoring device 15, the second bending limiting device 12 is correspondingly connected to the anchoring device 15, and the first bending limiting device 11 and the second bending limiting device 12 are used to avoid bending and deformation at the position where the dynamic cable 10 is electrically connected to the buoyancy power generation device 81 and at the position where the dynamic cable 10 is connected to the fixing device 82, with the bending and deformation will cause damage.

In a possible implementation, the buoyancy power generation device 81 and its adjacent second buoyancy device 30 are connected to each other through the second connecting device 50. Such a structure can limit a range of movement of the second buoyancy device 30, which avoids that a range of movement of the second buoyancy device 30 is too large to cause a too large change in the linear shape of the dynamic cable 10, or even to cause a serious pull on the fixing device 82; and thus is conducive to making the linear shape of the dynamic cable 10 remain in a stable state.

In the wind power system provided by present application, the dynamic cable 10 is in a design of a multi-humped in-water linear shape, which may ensure that the crest segments and trough segments in the linear shape of the dynamic cable 10 are all away from the seabed and has an ability to resist the drastic horizontal swaying of the floating device.

When subjected to an extreme wave or current load or a violent movement of the buoyancy power generation device 81, causing a considerable change in the linear shape of the dynamic cable 10, for example, the trough segments of the dynamic cable 10 move in the direction close to the seabed surface 90, in order to avoid the dynamic cable 10 from contacting the bottom, the first connecting device 40 is immediately tightened and transfers the load to the second buoyancy device 30, the second buoyancy device 30 in turn, under its own large enough buoyancy action, pulls the dynamic cable 10 pressed downwards to avoid further downward pressed movement of the dynamic cable 10, thereby realizing the effect of avoiding the dynamic cable 10 from coming into contact with the bottom.

In the wind power system provided by present application, the fact that the dynamic cable 10 presents a shape in which a plurality of crest segments and a plurality of trough segments are alternately connected with each other underwater may also ensure that the crest segments and the trough segments of the linear shape of the dynamic cable 10 are all away from the seabed and has the ability to resist the drastic horizontal swaying of the buoyancy power generation device 81.

The wind power system provided by the present application can be used for power transmission in marine industry, and the buoyancy power generation device 81 can be used for generating electric energy from wind energy and transmitting the electric energy underwater through the dynamic cable 10.

In the description of the present application, it should be understood that the terms "center", "length", "width", "thickness", "top", "bottom", "upper", "lower", "left", "right", "front", "back", "vertical", "horizontal", "inner", "outer", "axial", "circumferential" and the like indicate orientation or positional relationships based on those shown in the accompanying drawings, and are used only for the purpose of facilitating the description of the present application and simplifying the description, and do not indicate or imply that the positions or elements referred to must have a particular orientation, or a specific construction and operation, and thus cannot be construed as a limitation of the present application.

Furthermore, the terms "first" and "second" are only used for descriptive purposes, and are not to be construed as indicating or implying relative importance or implicitly specifying the number of technical features indicated. Thus, a feature defined by "first" or "second" may explicitly or implicitly be including one or more such features. In the description of the present application, "a plurality of" means at least two, e.g., two, three, etc., unless otherwise expressly and specifically limited.

In the present application, unless otherwise expressly provided and limited, the terms "mount", "connect to", "connect with", "fix", etc. are to be understood in a broad sense, for example, they may be a fixed connection, a removable connection, or a one-piece connection; or they may be a mechanical connection, an electrical connection, or mutual communication; or they may be a direct connection, an indirect connection through an intermediary medium, a communication between interiors of two elements, or an interaction between two elements. For those ordinary skilled in the art, the specific meanings of the above terms in the present application can be understood based on specific situations.

In the present application, unless otherwise expressly specified and limited, a first feature being "above" or "below" a second feature may include that the first feature is in direct contact with the second feature, or may include that the first feature is not in direct contact with the second feature, but in contact by an additional feature between them. Moreover, the first feature being "above", "over" and "on top of" the second feature includes that the first feature is directly above and diagonally above the second feature, or simply indicates that the first feature is horizontally higher than the second feature. The first feature being "under", "below" and "beneath" the second feature includes that the first feature is directly below and diagonally below the second feature, or simply indicates that the first feature is horizontally lower than the second feature.

Finally, it should be noted that the above embodiments are only used to illustrate the technical solutions of the present application, not to limit them.

## Claims

1. A dynamic cable protection system, comprising:
a dynamic cable (10) that is located in a water environment and is configured to transmit a signal or electrical energy between a water-surface device and an underwater device;
a plurality of first buoyancy devices (20) that are spaced apart on the dynamic cable (10) along a length direction of the dynamic cable (10);
a plurality of second buoyancy devices (30) that are configured to float on a water surface;
a plurality of first connecting devices (40), wherein the second buoyancy devices (30) are connected to the dynamic cable (10) through the first connecting devices (40), positions where the first connecting devices (40) are connected to the dynamic cable (10) are located between two adjacent first buoyancy devices (20),
**characterized in that**
the first connecting device (40) is a rope or an elastic cord;
and **in that** the dynamic cable (10) is configured to, under drive of the first buoyancy devices (20) and the second buoyancy devices (30), present a plurality of crest segments with the first buoyancy devices (20) being crest positions, and a plurality of trough segments with connection positions between the first connecting devices (40) and the dynamic cable (10) being trough positions;
and **in that**
the second buoyancy devices (30) and the first connecting devices (40) provide an upward pulling action to limit lowest positions of the trough segments, and the trough segments are connected between two adjacent crest segments.

2. The dynamic cable protection system according to claim 1, wherein the second buoyancy devices (30) comprise an upper buoyancy part (31) and a lower buoyancy part (32), the upper buoyancy part (31) and the lower buoyancy part (32) are hermetically connected to each other through a fixing part (33), and an average density of the upper buoyancy part (31) is less than or equal to an average density of the lower buoyancy part (32).

3. The dynamic cable protection system according to claim 1, further comprising a counterweight device (60), wherein the counterweight device (60) is connected to the dynamic cable (10), and the counterweight device (60) is located at an end of the dynamic cable (10) close to the water-surface device.

4. The dynamic cable protection system according to claim 1, further comprising a limiting device (70), wherein the limiting device (70) is connected to the dynamic cable (10) through a mooring device (71), a position where the mooring device (71) is connected to the dynamic cable (10) is located at an end of the dynamic cable (10) close to the underwater device, and the position where the mooring device (71) is connected to the dynamic cable (10) is further connected to the second buoyancy device (30) through the first connecting device (40).

5. The dynamic cable protection system according to claim 4, wherein the limiting device (70) is fixed to a water bottom or suspended in water, the limiting device (70) pulls the dynamic cable (10) in a direction close to the water bottom.

6. The dynamic cable protection system according to claim 5, wherein the dynamic cable (10) is provided with a protective device (13), the protective device (13) is located at least on a portion of an area between a connection position of the dynamic cable (10) to the underwater device and a connection position of the mooring device (71) to the dynamic cable (10).

7. The dynamic cable protection system according to any one of claims 1-6, further comprising a second connecting device (50), wherein two adjacent second buoyancy devices (30) are connected through the second connecting device (50).

8. The dynamic cable protection system according to any one of claims 1-6, wherein a surface of the dynamic cable (10) is covered with a biological inhibitor; or the surface of the dynamic cable (10) is covered with a sheath comprising the biological inhibitor.

9. The dynamic cable protection system according to claim 7, wherein the second connecting device (50) is a rope or an elastic cord.

10. A wind power system, comprising a water-surface device, an underwater device, a static cable and the dynamic cable protection system according to any one of claims 1-9, wherein the water-surface device is a floating wind turbine generator, the underwater device is a fixing device (82), one end of a dynamic cable (10) of the dynamic cable protection system is electrically connected to the floating wind turbine generator, and the other end of the dynamic cable (10) is connected to the static cable through the fixing device (82).

11. The wind power system according to claim 10, wherein a position where the dynamic cable (10) is electrically connected to the floating wind turbine generator is provided with a first bending limiting device (11); and/or a position where the dynamic cable (10) is connected to the fixing device (82) is provided with a second bending limiting device (12).

12. The wind power system according to claim 10, wherein the floating wind turbine generator and an adjacent second buoyancy device (30) are connected to each other through a second connecting device (50).

## Patentansprüche

1. Dynamisches Kabelschutzsystem, umfassend:
ein dynamisches Kabel (10), das sich in einer Wasserumgebung befindet und konfiguriert ist, um ein Signal oder elektrische Energie zwischen einer Wasseroberflächenvorrichtung und einer Unterwasservorrichtung zu übertragen;
eine Vielzahl von ersten Auftriebsvorrichtungen (20), die entlang einer Längsrichtung des dynamischen Kabels (10) auf dem dynamischen Kabel (10) voneinander beabstandet sind;
eine Vielzahl von zweiten Auftriebsvorrichtungen (30), die konfiguriert sind, um auf einer Wasseroberfläche zu schwimmen;
eine Vielzahl von ersten Verbindungsvorrichtungen (40), wobei die zweiten Auftriebsvorrichtungen (30) mit dem dynamischen Kabel (10) durch die ersten Verbindungsvorrichtungen (40) verbunden sind, Stellen, an denen die ersten Verbindungsvorrichtungen (40) mit dem dynamischen Kabel (10) verbunden sind, sich zwischen zwei benachbarten ersten Auftriebsvorrichtungen (20) befinden,
**dadurch gekennzeichnet, dass** die erste Verbindungsvorrichtung (40) ein Seil oder eine elastische Schnur ist;
und dadurch, dass das dynamische Kabel (10) konfiguriert ist, um unter dem Einfluss der ersten Auftriebsvorrichtung (20) und der zweiten Auftriebsvorrichtung (30) eine Vielzahl von Scheitelsegmenten aufzuweisen, wobei die ersten Auftriebsvorrichtungen (20) Scheitelstellen darstellen und eine Vielzahl von Talsegmenten mit Verbindungsstellen zwischen den ersten Verbindungsvorrichtungen (40) und dem dynamischen Kabel (10) Talstellen sind,
und dadurch, dass die zweiten Auftriebsvorrichtungen (30) und die ersten Verbindungsvorrichtungen (40) eine Zugkraft nach oben bereitstellen, um die tiefsten Stellen der Talsegmente zu begrenzen, und die Talsegmente zwischen zwei benachbarten Scheitelsegmenten verbunden sind.

2. Dynamisches Kabelschutzsystem nach Anspruch 1, wobei die zweiten Auftriebsvorrichtungen (30) ein oberes Auftriebselement (31) und ein unteres Auftriebselement (32) umfassen, das obere Auftriebselement (31) und das untere Auftriebselement (32) durch ein Befestigungselement (33) hermetisch miteinander verbunden sind und eine mittlere Dichte des oberen Auftriebselements (31) kleiner als oder gleich wie eine mittlere Dichte des unteren Auftriebselements (32) ist.

3. Dynamisches Kabelschutzsystem nach Anspruch 1, weiter umfassend eine Gegengewichtsvorrichtung (60), wobei die Gegengewichtsvorrichtung (60) mit dem dynamischen Kabel (10) verbunden ist und sich die Gegengewichtsvorrichtung (60) an einem Ende des dynamischen Kabels (10) nahe der Wasseroberflächenvorrichtung befindet.

4. Dynamisches Kabelschutzsystem nach Anspruch 1, weiter umfassend eine Begrenzungsvorrichtung (70), wobei die Begrenzungsvorrichtung (70) über eine Verankerungsvorrichtung (71) mit dem dynamischen Kabel (10) verbunden ist, eine Stelle, an der die Verankerungsvorrichtung (71) mit dem dynamischen Kabel (10) verbunden ist, sich an einem Ende des dynamischen Kabels (10) nahe der Unterwasservorrichtung befindet und die Stelle, an der die Verankerungsvorrichtung (71) mit dem dynamischen Kabel (10) verbunden ist, weiter über die erste Verbindungsvorrichtung (40) mit der zweiten Auftriebsvorrichtung (30) verbunden ist.

5. Dynamisches Kabelschutzsystem nach Anspruch 4, wobei die Begrenzungsvorrichtung (70) am Wasserboden befestigt oder im Wasser aufgehängt ist, die Begrenzungsvorrichtung (70) das dynamische Kabel (10) in eine Richtung nahe dem Wasserboden zieht.

6. Dynamisches Kabelschutzsystem nach Anspruch 5, wobei das dynamische Kabel (10) mit einer Schutzvorrichtung (13) versehen ist, die Schutzvorrichtung (13) sich mindestens auf einem Abschnitt eines Bereichs zwischen einer Verbindungsstelle des dynamischen Kabels (10) mit der Unterwasservorrichtung und einer Verbindungsstelle der Verankerungsvorrichtung (71) mit dem dynamischen Kabel (10) befindet.

7. Dynamisches Kabelschutzsystem nach einem der Ansprüche 1-6, weiter umfassend eine zweite Verbindungsvorrichtung (50), wobei zwei benachbarte zweite Auftriebsvorrichtungen (30) durch die zweite Verbindungsvorrichtung (50) verbunden sind.

8. Dynamisches Kabelschutzsystem nach einem der Ansprüche 1-6, wobei eine Oberfläche des dynamischen Kabels (10) mit einem biologischen Inhibitor beschichtet ist; oder die Oberfläche des dynamischen Kabels (10) mit einem Mantel beschichtet ist, der den biologischen Inhibitor enthält.

9. Dynamisches Kabelschutzsystem nach Anspruch 7, wobei die zweite Verbindungsvorrichtung (50) ein Seil oder eine elastische Schnur ist.

10. Windkraftanlage, umfassend eine Wasseroberflächenvorrichtung, einer Unterwasservorrichtung, ein statisches Kabel und das dynamische Kabelschutzsystem nach einem der Ansprüche 1-9, wobei die Wasseroberflächenvorrichtung ein schwimmender Windturbinengenerator ist, die Unterwasservorrichtung eine Befestigungsvorrichtung (82) ist, ein Ende eines dynamischen Kabels (10) des dynamischen Kabelschutzsystems elektrisch mit dem schwimmenden Windturbinengenerator verbunden ist und das andere Ende des dynamischen Kabels (10) über die Befestigungsvorrichtung (82) mit dem statischen Kabel verbunden ist.

11. Windkraftanlage nach Anspruch 10, wobei eine Stelle, an der das dynamische Kabel (10) elektrisch mit dem schwimmenden Windturbinengenerator verbunden ist, mit einer ersten Biegebegrenzungsvorrichtung (11) versehen ist und/oder eine Stelle, an der das dynamische Kabel (10) mit der Befestigungsvorrichtung (82) verbunden ist, mit einer zweiten Biegebegrenzungsvorrichtung (12) versehen ist.

12. Windkraftanlage nach Anspruch 10, wobei der schwimmende Windturbinengenerator und eine benachbarte zweite Auftriebsvorrichtung (30) durch eine zweite Verbindungsvorrichtung (50) miteinander verbunden sind.

## Revendications

1. Système de protection de câble dynamique, comprenant :
un câble dynamique (10) qui est situé dans un environnement aquatique et qui est configuré pour transmettre un signal ou de l'énergie électrique entre un dispositif de surface de l'eau et un dispositif sous-marin ;
une pluralité de premiers dispositifs de flottabilité (20) qui sont espacés sur le câble dynamique (10) le long d'une direction longitudinale du câble dynamique (10) ;
une pluralité de deuxièmes dispositifs de flottabilité (30) qui sont configurés pour flotter sur une surface de l'eau ;
une pluralité de premiers dispositifs de connexion (40), dans lequel les deuxièmes dispositifs de flottabilité (30) sont reliés au câble dynamique (10) par l'intermédiaire des premiers dispositifs de connexion (40), les positions où les premiers dispositifs de connexion (40) sont reliés au câble dynamique (10) sont situées entre deux premiers dispositifs de flottabilité (20) adjacents, **caractérisé en ce que** :
le premier dispositif de connexion (40) est une corde ou un cordon élastique;
et **en ce que** :
le câble dynamique (10) est configuré pour, sous l'action des premiers dispositifs de flottabilité (20) et des deuxièmes dispositifs de flottabilité (30), présenter une pluralité de segments de crête les premiers dispositifs de flottabilité (20) qui constituent les positions de crête, et une pluralité de segments de creux avec les positions de connexion entre les premiers dispositifs de connexion (40) et le câble dynamique (10) qui constituent les positions de creux ;
et **en ce que** :
les deuxièmes dispositifs de flottabilité (30) et les premiers dispositifs de connexion (40) fournissent une action de traction vers le haut pour limiter les positions les plus basses des segments de creux, et les segments de creux sont reliés entre deux segments de crête adjacents.

2. Système de protection de câble dynamique selon la revendication 1, dans lequel les deuxièmes dispositifs de flottabilité (30) comprennent une partie de flottabilité supérieure (31) et une partie de flottabilité inférieure (32), la partie de flottabilité supérieure (31) et la partie de flottabilité inférieure (32) sont hermétiquement reliées l'une à l'autre par l'intermédiaire d'une partie de fixation (33), et une densité moyenne de la partie de flottabilité supérieure (31) est inférieure ou égale à une densité moyenne de la partie de flottabilité inférieure (32).

3. Système de protection de câble dynamique selon la revendication 1, comprenant en outre un dispositif de contrepoids (60), dans lequel le dispositif de contrepoids (60) est relié au câble dynamique (10), et le dispositif de contrepoids (60) est situé à une extrémité du câble dynamique (10) proche du dispositif de surface de l'eau.

4. Système de protection de câble dynamique selon la revendication 1, comprenant en outre un dispositif de limitation (70), dans lequel le dispositif de limitation (70) est relié au câble dynamique (10) par l'intermédiaire d'un dispositif d'amarrage (71), une position dans laquelle le dispositif d'amarrage (71) est relié au câble dynamique (10) est située à une extrémité du câble dynamique (10) proche du dispositif sous-marin, et la position dans laquelle le dispositif d'amarrage (71) est relié au câble dynamique (10) est en outre reliée au deuxième dispositif de flottabilité (30) par l'intermédiaire du premier dispositif de connexion (40).

5. Système de protection de câble dynamique selon la revendication 4, dans lequel le dispositif de limitation (70) est fixé à un fond d'eau ou suspendu dans l'eau, le dispositif de limitation (70) tire le câble dynamique (10) dans une direction proche du fond d'eau.

6. Système de protection de câble dynamique selon la revendication 5, dans lequel le câble dynamique (10) est pourvu d'un dispositif de protection (13), le dispositif de protection (13) est situé au moins sur une partie d'une zone entre une position de connexion du câble dynamique (10) au dispositif sous-marin et une position de connexion du dispositif d'amarrage (71) au câble dynamique (10).

7. Système de protection de câble dynamique selon l'une quelconque des revendications 1 à 6, comprenant en outre un deuxième dispositif de connexion (50), dans lequel deux deuxièmes dispositifs de flottabilité (30) adjacents sont reliés par l'intermédiaire du deuxième dispositif de connexion (50).

8. Système de protection de câble dynamique selon l'une quelconque des revendications 1 à 6, dans lequel une surface du câble dynamique (10) est recouverte d'un inhibiteur biologique ; ou la surface du câble dynamique (10) est recouverte d'une gaine comprenant l'inhibiteur biologique.

9. Système de protection de câble dynamique selon la revendication 7, dans lequel le deuxième dispositif de connexion (50) est une corde ou un cordon élastique.

10. Système d'énergie éolienne, comprenant un dispositif de surface de l'eau, un dispositif sous-marin, un câble statique et le système de protection de câble dynamique selon l'une quelconque des revendications 1 à 9, dans lequel le dispositif de surface de l'eau est un générateur d'éolienne flottante, le dispositif sous-marin est un dispositif de fixation (82), une extrémité d'un câble dynamique (10) du système de protection de câble dynamique est électriquement reliée au générateur d'éolienne flottante, et l'autre extrémité du câble dynamique (10) est reliée au câble statique par l'intermédiaire du dispositif de fixation (82).

11. Système d'énergie éolienne selon la revendication 10, dans lequel une position dans laquelle le câble dynamique (10) est électriquement relié au générateur d'éolienne flottante est pourvue d'un premier dispositif de limitation de pliage (11) ; et/ou une position dans laquelle le câble dynamique (10) est relié au dispositif de fixation (82) est pourvue d'un deuxième dispositif de limitation de pliage (12).

12. Système d'énergie éolienne selon la revendication 10, dans lequel le générateur d'éolienne flottante et un deuxième dispositif de flottabilité (30) adjacent sont reliés l'un à l'autre par l'intermédiaire d'un deuxième dispositif de connexion (50).
